Europäisches Patentamt

European Patent Office

Office européen des brevets

(11) Veröffentlichungsnummer: **0 262 554 B1**

# (12) EUROPÄISCHE PATENTSCHRIFT

(45) Veröffentlichungstag der Patentschrift: **21.11.91**

(51) Int. Cl.⁵: **H02B 1/20, H02B 1/18**

(21) Anmeldenummer: **87113803.8**

(22) Anmeldetag: **22.09.87**

(54) **Einrichtung zum Verbinden von Installationsgeräten mit Stromsammelschiene eines Grundsammelschienensystems.**

(30) Priorität: **03.10.86 DE 3633668**

(43) Veröffentlichungstag der Anmeldung:
**06.04.88 Patentblatt 88/14**

(45) Bekanntmachung des Hinweises auf die
Patenterteilung:
**21.11.91 Patentblatt 91/47**

(84) Benannte Vertragsstaaten:
**AT BE CH DE ES FR GB GR IT LI LU NL SE**

(56) Entgegenhaltungen:
**DE-A- 2 543 959**
**DE-A- 3 409 211**
**DE-B- 1 277 410**

(73) Patentinhaber: **Rittal-Werk Rudolf Loh GmbH & Co. KG**
**Auf dem Stützelberg**
**W-6348 Herborn(DE)**

(72) Erfinder: **Kahler, Klaus-Dietmar**
**Im Auspen 1**
**W-6209 Heidenrod 2(DE)**
Erfinder: **Mohr, Bernd**
**Im Paffert 2**
**W-6220 Rüdesheim(DE)**
Erfinder: **Wagener, Hans**
**Rittershauser Strasse 14**
**W-6344 Dietzhölztal 2(DE)**

(74) Vertreter: **Vogel, Georg Pat.-Ing.**
**Hermann-Essig-Str. 35**
**W-7141 Schwieberdingen(DE)**

EP 0 262 554 B1

## Beschreibung

**Einrichtung zum Verbinden von Installationsgeräten mit Stromsammelschienen eines Grundsammelschienensystems**

Die Erfindung btrifft eine Einrichtung zum mechanischen und elektrischen Verbinden von Installationsgeräten, wie Leitungsschutzschaltern, Fehlerstromschutzschaltern, NH-Sicherungslastschaltern, NH-Sicherungshaltern und dgl., mit Stromsammelschienen eines Grundsammelschienensystems, bei der in Längsrichtung der Stromsammelschienen mehrere Installationsgeräte im Abstand aneinanderreihbar sind, wobei zum Verbinden der Installationsgeräte mit einem Sammelschienensystem mit abweichendem Mittenabstand der Stromsammelschienen Adapter mit einer entsprechenden Anzahl von Kontaktschienen vorgesehen sind, die im Bereich der Unterseite des Adapters mit Anschlußkontaktelementen versehen sind, wobei die Anschlußkontaktelemente senkrecht zu den Stromsammelschienen im Mittenabstand der Stromsammelschienen des abweichenden Sammelschienensystems angeordnet sind und wobei an den Kontaktschienen im Bereich der Oberseite des Adapters Anschlußelemente für den Anschluß der Installationsgeräte angeordnet sind.

Eine Einrichtung dieser Art ist durch die DE-A 34 09 211 bekannt. Dabei ist nur das mittlere Anschlußkontaktelement fest mit dem Adapter verbunden, während die beiden äußeren Anschlußkontaktelemente am Adapter auf verschiedene Anschlußabstände einstellbar sind, so daß der Adapter an den Stromsammelschienen verschiedener Stromsammelschienensysteme mit unterschiedlichen Mittenabständen der Stromsammelschienen anschließbar ist. Die Installationsgeräte sind auf der Oberseite des Adapters befestigt und müssen mit den Anschlußelementen der Kontaktschienen des Adapters verdrahtet werden.

Mit dieser bekannten Einrichtung lassen sich daher keine Installationsgeräte verwenden, die selbst Anschlußkontaktelemente für Stromsammelschienen eines Grundsammelschienensystems mit fest vorgegebenem Anschlußabstand aufweisen.

Aus der DE-A 25 43 959 ist ein NH-Sicherungslastschalter bekannt, bei dem die Anschlußkontaktelemente der aus drei Installationsgeräten bestehenden Einheit senkrecht zu den Stromsammelschienen in einem Abstand angeordnet sind, der dem Mittenabstand der Stromsammelschienen des Grundsammelschienensystems entspricht. Die Installationsgeräte sind daher nur für dieses Grundsammelschienensystem einsetzbar. Handelt es sich um eine Baureihe von unterschiedlich großen Installationsgeräten, dann sind längs der Stromsammelschienen die drei Installationseinheiten in unterschiedlich großen Anreihabständen aneinandergereiht. Die Anreihabstände richten sich nach dem Mindestsicherheitsabstand und den Breiten der Installationsgeräte, die bei NH-Sicherheitslastschaltern durch die erforderlichen Einbaumaße der NH-Sicherungen bestimmt sind.

Wie diese bekannte Einrichtung weiterhin zeigt, ist es durch besondere Ausbildung der Verbindungsschienen in den Installationsgeräten möglich, die drei Anschlußkontaktelemente in Längsrichtung der Stromsammelschienen auf ein Maß zu bringen, das kleiner ist als der Anreihabstand der äußeren Installationsgeräte in Längsrichtung der Stromsammelschienen. Dies wird durch entsprechend gegenüber den Ausgangskontaktstellen zur mittleren Verbindungsschiene hin versetzten Eingangskontaktstellen der Verbindungsschienen erreicht. Damit läßt sich eine Baueinheit aus drei Installationsgeräten auch über die zur Befestigung der Stromsammelschienen verwendeten Stromsammelschienenhalter hinweg mit den Stromsammelschienen verbinden.

Es ist Aufgabe der Erfindung, eine Einrichtung der eingangs erwähnten Art zu schaffen, bei der Installationsgeräte mit Anschlußkontaktelementen mit einem auf den Mittenabstand der Stromsammelschienen eines Grundsammelschienensystems abgestimmten Anschlußabstand über einen Adapter auch an Stromsammelschienen eines abweichenden Sammelschienensystems in gleicher Weise anschließbar sind, wobei auch Installationsgeräte einer Baureihe mit unterschiedlich großem Anreihabstand verwendbar sind.

Diese Aufgabe wird nach der Erfindung dadurch gelöst, daß Installationsgeräte verwendet sind, bei denen die Anschlußkontaktelemente senkrecht zu den Stromsammelschienen in dem vorgegebenen Anschlußabstand der Stromsammelschienen des Grundsammelschienensystems angeordnet sind, daß die Anschlußelemente der Kontaktschienen des Adapters als stromsammelschienenartige Kontaktenden im Anschlußabstand der Anschlußkontaktelemente der Installationsgeräte ausgebildet und in Längsrichtung der Stromsammelschienen in einem Mindestsicherheitsabstand angeordnet sind, daß bei den kleinsten Installationsgeräten einer Baureihe von Installationsgeräten die Anschlußkontaktelemente in Längsrichtung der Stromsammelschienen in diesem Mindestsicherheitsabstand angeordnet sind und daß bei den größeren Installationsgeräten einer Baureihe von Installationsgeräten Verbindungsschienen der Installationsgeräte den in Längsrichtung der Stromsammelschienen für die Anschlußkontaktelemente vorgegebenen Mindestsicherheitsabstand in einen für die Abgangskontaktstellen der zusammengefaßten Installationsgeräte erforderlichen Anreihabstand umsetzen.

Die Installationsgeräte sind mit ihren Anschlußkontaktelementen auf den Mittenabstand des Grundsammelschienensystems abgestimmt und können daher direkt mit den Stromsammelschie-nen dieses Grundsammelschienensystems verbun-den werden. Für die Verbindung derselben Installationsgeräte mit den Stromsammelschienen eines Sammelschienensystems mit abweichendem Mittenabstand wird zunächst ein Adapter mit den Stromsammelschienen des Grundsammelschienensystems verbunden, der mit den Kontaktenden im Bereich der Oberseite des Adapters eine auf das Grundsammelschienensystem abgestimmte Anschlußmöglichkeit für die Installationsgeräte schafft. Der Anreihabstand der Kontaktschienen im Bereich der Oberseite des Adapters entspricht da-bei dem Mindestsicherheitsabstand in Längsrich-tung der Stromsammelschienen und auch dem Anreihabstand der Verbindungsschienen bei den kleinsten Installationsgeräten der Baureihe. Bei den größeren Installationsgeräten der Baureihe werden die Verbindungsschienen mit ihren Eingangskon-taktstellen auf den Mindestsicherheitsabstand ge-bracht, während die Ausgangskontaktstellen der Verbindungsschienen auf den für die größeren In-stallationsgeräte erforderlichen Anreihabstand ge-bracht sind. Dies ist mit an sich bekannten Verbin-dungsschienen mit seitlich versetzten Endabschnit-ten leicht lösbar. Auf diese Weise lassen sich alle Installationsgeräte einer Baureihe mit einem ein-heitlichen Adapter mit einem Sammelschienens-ystem mit einem abweichenden Mittenabstand der Stromsammelschienen verbinden. Dabei kann der Adapter den Mittenabstand gegenüber dem Grund-sammelschienensystem vergrößern oder verklei-nern.

Eine ausreichend feste mechanische Verbindung mit kleinem Kontaktübergangswiderstand läßt sich zwischen dem Adapter und den Stromsammelschienen dadurch erreichen, daß die Anschlußkontaktelemente der Adapter als Kontaktbügel ausgebildet sind, deren Seitenschenkel in die Stromsammelschienen hintergreifende Haken auslaufen, und daß in die Mittelschenkel der Kontaktbügel Klemmschrauben einschraubbar sind, mit denen die zugeordneten Kontaktschienen des Adapters mit den zugeordneten Stromsammelschienen verspannbar sind.

Die Kontaktgabe zwischen den Kontaktschienen des Adapters und den Stromsammelschienen einerseits und den Anschlußkontaktelementen der Installationsgeräte andererseits wird dadurch erleichtert, daß die Kontaktschienen aus Flachmaterial gestanzt und gebogen sind, daß die der Unterseite zugekehrten Abschnitte der Kontaktschienen bündig mit der Unterseite des Adaptergehäuses abschließen, und daß die Kontaktenden der Kontaktschienen im Bereich von Ausnehmungen in der Oberseite des Adaptergehäuses angeordnet sind und bündig mit dieser abschließen.

Für die Festlegung der Kontaktschienen in dem Adaptergehäuse ist eine Ausgestaltung vorgesehen, die dadurch gekennzeichnet ist, daß die abgewinkelten Kontaktschienen des Adapters zwischen Trennwänden des Adapters geführt und gehalten sind, wobei Rastansätze der Trennwände in Rastdurchbrüche der Kontaktschienen einrasten.

Aus Sicherheitsgründen ist nach einer weiteren Ausgestaltung vorgesehen, daß Abdeckplatten die offene Oberseite des Adaptergehäuses bis auf Einführöffnungen für die Anschlußkontaktelemente der Installationsgeräte abdecken.

Für ein Drehstrom-Sammelschienensystem ist die Auslegung so, daß der Adapter drei Kontaktschienen mit Anschlußkontaktelementen für ein dreipoliges Sammelschienensystem und dreipolige, als Baueinheit ausgebildete Installationsgeräte aufnimmt.

Eine ausreichend feste mechanische Verbindung mit kleinem Kontaktübergangswiderstand läßt sich zwischen den Kontaktschienen des Adapters bzw. den Stromsammelschienen des Grundsam-melschienensystems und den Anschlußkontaktele-menten mit den daran abgehenden Verbindungsschienen der Installationsgeräte dadurch erreichen, daß die Anschlußkontaktelemente der Installationsgeräte einer Baureihe als Kontaktbügel ausgebildet sind, deren Seitenschenkel in die Kontaktenden der Kontaktschienen des Adapters hintergreifende Haken auslaufen, und daß in die Mittelschenkel der Kontaktbügel Klemmschrauben einschraubbar sind, mit denen zugeordnete Verbindungsschienen der Installationsgeräte mit den zugeordneten Kontaktenden der Kontaktschienen des Adapters verspannbar sind.

Ist nach einer Ausgestaltung vorgesehen, daß bei den kleinsten Installationsgeräten der Baureihe die Ausgangskontaktstellen der Verbindungsschienen mit den Eingangskontaktstellen der Installationsgeräte zusammenfallen und mit diesen in Längsrichtung der Stromsammelschienen in dem Mindestsicherheitsabstand angeordnet sind und, daß die Ausgangsanschlußstellen der kleinsten In-stallationsgeräte in Längsrichtung der Stromsam-melschienen ebenfalls im Mindestsicherheitsab-stand angeordnet und senkrecht zu den Stromsam-melschienen auf die Eingangskontaktstellen ausge-richtet sind, dann stehen die Eingngskontaktstellen und die Ausgangskontaktstellen der Installationsgeräte auf Verbindungslinien, die senkrecht zur Längsrichtung der Stromsammelschienen stehen.

Damit dies trotz des kleineren Anreihabstandes der Anschlußkontaktelemente und der Eingangskontaktstellen der Verbindungsschienen auch bei größeren Installationsgeräten der Baureihe zutrifft, sieht eine weitere Ausgestaltung vor, daß bei den größeren Installationsgeräten der Baureihe die Ausgangskontaktstellen der Verbindungsschienen mit den Eingangskontaktstellen und Anschlußkontaktelementen der Installationsgeräte zusammenfallen und mit diesen in Längsrichtung der Stromsammelschienen in dem für diese größeren Installationsgeräte erforderlichen Anreihabstand angeordnet sind, und daß die Ausgangsanschlußstellen der größeren Installationsgeräte in Längsrichtung der Stromsammelschienen ebenfalls in dem Anreihabstand angeordnet und senkrecht zu den Stromsammelschienen auf die Eingangskontaktstellen und Anschlußkontaktelemente ausgerichtet sind.

Der Zugang zu den Kontaktstellen der Installationsgeräte wird dadurch erleichtert, daß die Eingangskontaktstellen im Bereich der einen und die Ausgangsanschlußstellen der Installationsgeräte im Bereich der anderen, parallel zu den Stromsammelschienen verlaufenden Seiten des Installationsgerätes angeordnet sind.

Bei als NH-Sicherungshaltern oder Sicherungslastschaltern ausgebildeten Installationsgeräten sind Aufnahmekontakte für NH-Sicherungen mit den Eingangs- und den Ausgangsanschlußkontaktstellen der Installationsgeräte elektrisch leitend verbunden. Für den Anschluß der abgehenden Leitungen ist dabei zusätzlich vorgesehen, daß die mit den Ausgangsanschlußstellen verbundenen Aufnahmekontakte zusätzlich als Schraub- oder Klemmanschluß ausgebildet sind.

Die Veränderung der Anreihabstände bei größeren Installationsgeräten wird nach einer Ausgestaltung dadurch erreicht, daß die Eingangskontaktstellen der äußeren Verbindungsschienen der Installationsgeräte durch seitlich in Richtung zu der mittleren geraden Verbindungsschiene hin versetzten Endabschnitten der beiden äußeren Verbindungsschienen gebildet sind und daß die Eingangskontaktstellen dieser Endabschnitte der Verbindungsschienen in Längsrichtung der Stromsammelschienen auf den Mindestsicherheitsabstand gebracht sind. Die mittlere Verbindungsschiene kann dann als Abschnitt eines Flachbandmaterials ausgebildet sein und nur die äußeren Verbindungsschienen weisen versetzte Endabschnitte auf.

Die Erfindung wird anhand eines in den Zeichnungen dargestellten Ausführungsbeispiels näher erläutert. Es zeigt:

Fig. 1 in einem zur Unterseite des Adapters senkrechten Schnitt die Verbindung des Adapters mit den Stromsammelschienen eines Sammelschienensystems mit vom Mittelabstand b des Grundsammelschienensystems abweichenden Mittenabstand a der Stromsammelschienen und die Verbindung von Installationsgeräten mit dem Adapter, wobei die Anschlußkontaktelemente der Installationsgeräte senkrecht zu den Stromsammelschienen auf den Mittenabstand b des Grundsammelschienensystems ausgelegt sind,

Fig. 2 die Verbindung der Installationsgeräte mit dem Adapter in Draufsicht, wobei der Anreihabstand der Installationsgeräte in der Baueinheit auf den Mindestsicherheitsabstand c und den entsprechenden Anreihabstand der kleinsten Installationsgeräte der Baureihe von Installationsgeräten abgestimmt ist,

Fig. 3 einen der Fig. 1 entsprechenden Schnitt, wobei größere Installationsgeräte mit entsprechend größerem Anreihabstand d mit dem Adapter verbunden sind und

Fig. 4 die Verbindung zwischen dem Adapter und den Verbindungsschienen der größeren Installationsgeräte der Baureihe, wobei die Verbindungsschienen den Anreihabstand von dem Mindestsicherheitsabstand c auf den für diese Installationsgeräte größeren Anreihabstand d umsetzen.

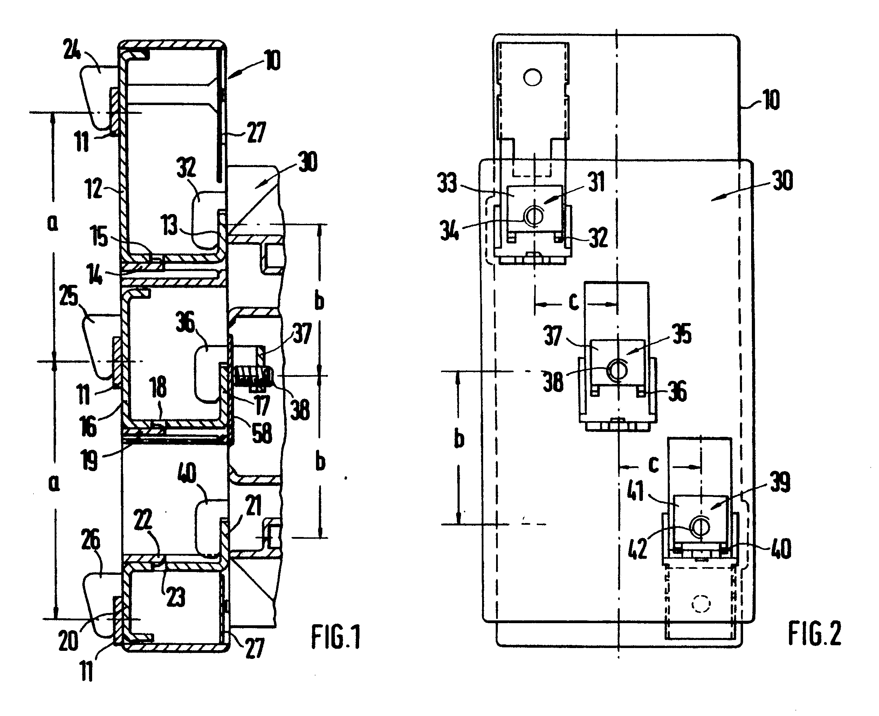

In dem Ausführungsbeispiel nach Fig. 1 und 2 wird eine aus drei Installationsgeräten gebildete Baueinheit mittels eines Adapters 10 mit einem Stromsammelschienensystem verbunden, bei dem die Stromsammelschienen 11 einen Mittenabstand a aufweisen, der sich vom Mittenabstand b unterscheidet, auf den die Anschlußkontaktelemente 31, 35 und 39 der Installationsgeräte 30 mit dem kleinsten Anreihabstand c ausgelegt sind. Dieser Anreihabstand ist mit dem Mindestsicherheitsabstand c in Längsrichtung der Stromsammelschienen 11 identisch. Die Installationsgeräte 30 sind daher die kleinsten Installationsgeräte der Baureihe. Bei NH-Sicherungshaltern oder NH-Sicherungslastschaltern entspricht dies z.B. der Type 00 bis zu einer Nennstromstärke von 160A. Von den Installationsgeräten 30 sind nur die Anschlußkontaktelemente 31, 35 und 39 und die Verbindungsschienen 58 gezeigt. Der Adapter 10 nimmt im Adaptergehäuse aus Kunststoff die drei Kontaktschienen 12, 16 und 20 auf, die so abgewinkelt sind, daß sie in mittels Trennwände 14, 19 und 22 abgeteilten Kammern des Adaptergehäuses geführt und gehalten werden. Dabei rasten Rastansätze der Trennwände 14, 19 und 22 in die Rastdurchbrüche 15, 18 und 21 der Kontaktschienen 12, 16 und 20 ein. Abschnitte der Kontaktschienen 12, 16 und 20 schließen dabei die Kammern zur Unterseite des Adapters 10 hin bündig ab. Im Bereich der offenen Oberseite des Adapters 10 bilden die abgewinkelten Kontaktenden 13, 17 und 21 eine Art Stromsammelschienen, deren Mittenabstand b dem Mittenabstand des Grundsammelschienensystems entspricht, auf das die Installationsgeräte 30 ausgelegt sind. Mit Hilfe von Abdeckplatten 27 wird die Oberseite des Adapters 10 bis auf Einführöffnungen für die Anschlußkontaktelemente 31, 35 und 39 der Installationsgeräte 30 verschlossen.

Es ist leicht einzusehen, daß der Adapter 10 den Mittenabstand b des Grundsammelschienensystems auch verkleinern kann. Die Kontaktschienen sind dann entsprechend abzuwinkeln und im Adaptergehäuse festzulegen.

Die Anschlußkontaktelemente 31, 35 und 39 sind als Kontaktbügel ausgebildet, bei denen die Seitenschenkel in Haken 32, 36 und 40 auslaufen. Diese Haken hintergreifen die Kontaktenden 13, 17 und 21 der Kontaktschienen 12, 16 und 20 des Adapters 70. In den Mittelschenkeln 33, 37 und 41 der Anschlußkontaktelemente 31, 35 und 39 sind Klemmschrauben 34, 38 und 42 eingeschraubt, mit denen die Verbindungsschienen 58 der Installationsgeräte 30 mit den Kontaktenden 13, 17 und 21 der Kontaktschienen 12, 16 und 20 des Adapters 10 verspannt werden. Auf diese Weise wird die Baueinheit mit den drei kleinsten Installationsgeräten 30 mechanisch fest und mit kleinem Kontaktübergangswiderstand mit dem Adapter 10 verbunden. Da die Anschlußkontakte 24, 25 und 26 des Adapters 10 in gleicher Weise ausgebildet sind, wird auch der Adapter 10 mit seinen Kontaktschienen 12, 16 und 20 mechanisch fest und mit ausreichend kleinem Kontaktübergangswiderstand mit den Stromsammelschienen 11 verbunden.

Im Adapter 10 sind, wie Fig. 2 zeigt, die Installationsgeräte 30 im Mindestsicherheitsabstand c angeordnet. Dasselbe trifft auch für den in Längsrichtung der Stromsammelschiene 11 gewählten Abstand der Kontaktenden 13, 17 und 21 des Adapters 10 zu. Dabei können durchaus kleine Abweichungen in Kauf genommen werden, ohne das Verbindungsschema der Installationsgeräte über den Adapter zu beeinträchtigen. Die Anschlußkontaktelemente 31, 35 und 39 der Installationsgeräte 30 verbinden die Eingangskontaktstellen der Verbindungsschienen 58 mit den Kontaktenden 13, 17 und 21 des Adapters 10. Die Verbindungsschienen 58 führen zur oberen Schmalseite der Baueinheit, die parallel zu den Stromsammelschienen 11 verläuft, und bilden dort mit ihren Ausgangskontaktstellen die Eingangskontaktstellen der Installationsgeräte 30. Bei NH-Sicherungsschaltern oder NH-Sicherungslastschaltern sind Aufnahmekontakte für NH-Sicherungen mit den Eingangskontaktstellen der Installationsgeräte 30 verbunden. Im Bereich der unteren Schmalseite der Baueinheit sind als Ausgangsanschlußstellen in gleicher Anordnung wie auf der gegenüberliegenden Schmalseite Aufnahmekontakte für die NH-Sicherungen angebracht. Diese Aufnahmekontakte weisen zudem einen Schraub-oder Klemmanschluß für die abgehende Leitung auf.

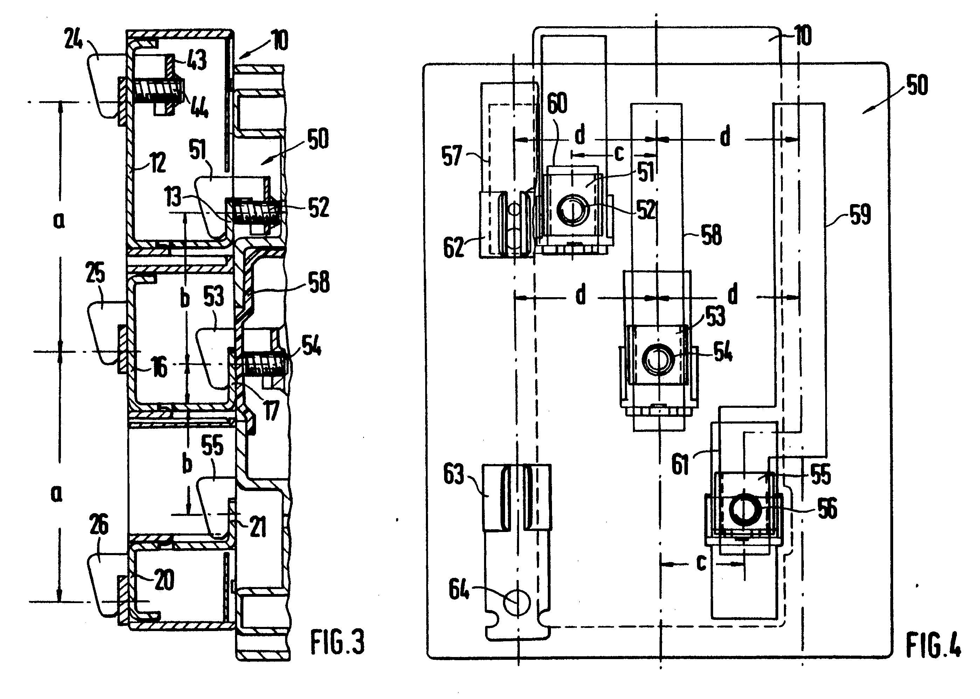

Bei dem Ausführungsbeispiel nach Fig. 3 und 4 werden größere Installationsgeräte 50, die in Längsrichtung der Stromsammelschienen 11 einen größeren Anreihabstand d erfordern, über denselben Adapter 10 mit den Stromsammelschienen 11 des Sammelschienensystems verbunden. Dabei ist an dem Anschlußkontaktelement 26 des Adapters 10 gezeigt, daß auch die Anschlußkontaktelemente des Adapters 10 als Kontaktbügel ausgebildet sind. Die Haken der Seitenschenkel dieser Kontaktbügel hintergreifen die Stromsammelschienen 11. Die Mittelschenkel 43 der Kontaktbügel nehmen Klemmschrauben 44 auf, die die Kontaktschienen 12, 16 und 20 des Adapters 10 gegen die Stromsammelschienen 11 verspannen.

Fig. 4 zeigt, wie die größeren Installationsgeräte 50 mit ihrem größeren Anreihabstand d mit dem Adapter 10 verbunden werden. Die Anschlußkontaktelemente 51, 53 und 55 mit ihren Klemmschrauben 52, 54 und 56 sind senkrecht zu den Stromsammelschienen 11 auf den Mittenabstand b des Grundsammelschienensystems und in Längsrichtung auf den Mindestsicherheitsabstand c, d.h. den Anreihabstand der Kontaktenden 13, 17 und 21 des Adapters 10, ausgerichtet, so daß die Baueinheit mit den drei größeren Installationsgeräten 50 in gleicher Weise mechanisch und elektrisch mit dem Adapter 10 verbunden werden kann. Die Verbindungsschienen der Installationsgeräte 50 sind jedoch anders ausgestaltet. Lediglich die mittlere Verbindungsschiene 58 behält senkrecht zu den Stromsammelschienen 11 die Ausrichtung der Eingangs- und Ausgangskontaktstelle bei, wie die strichpunktierte Mittellinie angibt. Die äußeren Verbindungsschienen 57 und 59 sind mit ihren Ausgangskontaktstellen, die den Eingangskontaktstellen der Installationsgeräte 50 entsprechen, auf den größeren Anreihabstand d gebracht, während die nach der mittleren Verbindungsschiene 58 hin versetzten Endabschnitte 60 und 61 der Verbindungsschienen 57 und 59 die Eingangskontaktstellen dieser Verbindungsschienen bilden und mit den zugeordneten Anschlußkontaktelementen 51 und 55 den Anreihabstand c zum Adapter 10 hin einnehmen.

Im Bereich der oberen Schmalseite der Baueinheit werden Aufnahmekontakte 62 für NH-Sicherungen mit den Ausgangskontaktstellen der Verbindungsschienen 57, 58 und 59 verbunden. Senkrecht zu den Stromsammelschienen 11 ausgerichtet sind im Bereich der unteren Schmalseite der Baueinheit die Aufnahmekontakte 63 mit dem Schraub- oder Klemmanschluß 64 für die abgehende Leitung angebracht. Der Anreihabstand d erlaubt den Einsatz von NH-Sicherungen bis zu einer Nennstromstärke von 250A.

Mit entsprechend abgewinkelten Verbindungsschienen läßt sich also jeweils der für die größeren Installationsgeräten erforderliche Anreihabstand d auf den für die Verbindung mit dem Adapter 10 erforderlichen Anreihabstand c, d.h. den Mindestsicherheitsabstand bei den kleinsten Installationsgeräten der Baureihe umnsetzen. Dann sind alle Installationsgeräte der Baureihe direkt mit den Stromsammelschienen des Grundsammelschienensystems und über einen einheitlichen Adapter 10 mit den Stromsammelschienen eines vom Grundsammelschienensystem abweichenden Sammelschienensystems verbindbar. Mit Hilfe eines weiteren Adapters ist die Verbindung derselben Installationsgeräte auch mit einem weiteren, von beiden Sammelschienensystemen abweichenden dritten Sammelschienensystem möglich.

Auf dem Adapter lassen sich auch einzelne Installationsgeräte anbringen und mit einem der Kontaktenden der Kontaktschienen des Adapters verbinden. Dabei können auf dem Adapter gleiche oder auch unterschiedliche Installationsgeräte aneinandergereiht werden. Es kann auch nur ein einziges Installationsgerät auf den Adapter gesetzt werden.

**Patentansprüche**

1. Einrichtung zum mechanischen und elektrischen Verbinden von Installationsgeräten (30,50), wie Leitungsschutzschaltern, Fehlerstromschutzschaltern, NH-Sicherungslastschaltern, NH-Sicherungshaltern und dgl., mit Stromsammelschienen eines Grundsammelschienensystems, bei der in Längsrichtung der Stromsammelschienen mehrere Installationsgeräte (30,50) im Abstand aneinanderreihbar sind, wobei zum Verbinden der Installationsgeräte (30,50) mit einem Sammelschienensystem mit abweichendem Mittenabstand (a) der Stromsammelschienen (11) Adapter (10) mit einer entsprechenden Anzahl von Kontaktschienen (12,16,20) vorgesehen sind, die im Bereich der Unterseite des Adapters (10) mit Anschlußkontaktelementen (24,25,26) versehen sind, wobei die Anschlußkontaktelemente (24,25,26) senkrecht zu den Stromsammelschienen (11) im Mittenabstand (a) der Stromsammelschienen (11) des abweichenden Sammelschienensystems angeordnet sind und wobei an den Kontaktschienen (12,16,20) im Bereich der Oberseite des Adapters (10) Anschlußelemente für den Anschluß der Installationsgeräte (30,50) angeordnet sind, dadurch gekennzeichnet, daß Installationsgeräte (30,50) verwendet sind, bei denen die Anschlußkontaktelemente (51,53,55) senkrecht zu den Stromsammelschienen in dem vorgegebenen Anschlußabstand (b) der Stromsammelschienen des Grundsammelschienensystems angeordnet sind, daß die Anschlußelemente der Kontaktschienen (12,16,20) des Adapters (10) als stromsammelschienenartige Kontaktenden (13,17,21) im Anschlußabstand (b) der Anschlußkontaktelemente (31,35,39 bzw. 51,53,55) der Installationsgeräte (30 bzw. 50) ausgebildet und in Längsrichtung der Stromsammelschienen (11) in einem Mindestsicherheitsabstand (c) angeordnet sind, daß bei den kleinsten Installationsgeräten (30) einer Baureihe von Installationsgeräten die Anschlußkontaktelemente (31,35,39) in Längsrichtung der Stromsammelschienen (11) in diesem Mindestsicherheitsabstand (c) angeordnet sind und daß bei den größeren Installationsgeräten (50) einer Baureihe von Installationsgeräten Verbindungsschienen (57,58,59) der Installationsgeräte (50) den in Längsrichtung der Stromsammelschienen (11) für die Anschlußkontaktelemente (51,53,55) vorgegebenen Mindestsicherheitsabstand (c) in einen für die Abgangskontaktstellen der zusammengefaßten Installationsgeräte (50) erforderlichen Anreihabstand (d) umsetzen.

2. Einrichtung nach Anspruch 1, dadurch gekennzeichnet, daß die Anschlußkontaktelemente (24,25,26) der Adapter (10) als Kontaktbügel ausgebildet sind, deren Seitenschenkel in die Stromsammelschienen (11) hintergreifende Haken auslaufen, und daß in die Mittelschenkel (43) der Kontaktbügel Klemmschrauben (44) einschraubbar sind, mit denen die zugeordneten Kontaktschienen (12,16,20) des Adapters (10) mit den zugeordneten Stromsammelschienen (11) verspannbar sind.

3. Einrichtung nach Anspruch 1 oder 2, dadurch gekennzeichnet, daß die Kontaktschienen (12,16,20) aus Flachmaterial gestanzt und gebogen sind, daß die der Unterseite zugekehrten Abschnitte der Kontaktschienen (12,16,20) bündig mit der Unterseite des Adaptergehäuses abschließen, und daß die Kontaktenden (13,17,21) der Kontaktschienen (12,16,20) im Bereich von Ausnehmungen in der Oberseite des Adaptergehäuses angeordnet sind und bündig mit dieser abschließen.

4. Einrichtung nach einem der Ansprüche 1 bis 3, dadurch gekennzeichnet, daß die abgewinkelten Kontaktschienen (12,16,20) des Adapters (10) zwischen Trennwänden (14,19,22) des Adapters (10) geführt und gehalten sind, wobei Rastansätze der Trennwände (14,19,22) in Rastdurchbrüche (15,18,23) der Kontaktschienen (12,16,20) einrasten.

5. Einrichtung nach einem der Ansprüche 1 bis 4, dadurch gekennzeichnet, daß Abdeckplatten (27) die offene Oberseite des Adaptergehäuses bis auf Einführöffnungen für die Anschlußkontaktelemente (31,35,39 bzw. 51,53,55) der Installationsgeräte (30 bzw. 50) abdecken.

6. Einrichtung nach einem der Ansprüche 1 bi 5, dadurch gekennzeichnet, daß der Adapter (10) drei Kontaktschienen (12,16,20) mit Anschlußkontaktelementen (24,25,26) für ein dreipoliges Sammelschienensystem und als Baueinheit ausgebildete, dreipolige Installationsgeräte (30,50) aufnimmt.

7. Einrichtung nach einem der Ansprüche 1 bis 6, dadurch gekennzeichnet, daß die Anschlußkontaktelemente (31,35,39 bzw. 51,53,55) der Installationsgeräte (30 bzw. 50) einer Baureihe als Kontaktbügel ausgebildet sind, deren Seitenschenkel in die Kontaktenden (13,17,21) der Kontaktschienen (12,16,20) des Adapters (10) hintergreifende Haken (32,36,40) auslaufen, und daß in die Mittelschenkel (43) der Kontaktbügel Klemmschrauben (34,38,42 bzw. 52,54,60) einschraubbar sind, mit denen zugeordnete Verbindungsschienen (58) der Installationsgeräte (30 bzw. 50) mit den zugeordneten Kontaktenden (13,17,21) der Kontaktschienen (12,16,20) des Adapters (10) verspannbar sind.

8. Einrichtung nach Anspruch 7, dadurch gekennzeichnet, daß bei den kleinsten Installationsgeräten (30) der Baureihe die Ausgangskontaktstellen der Verbindungsschienen (58) mit den Eingangskontaktstellen der Installationsgeräte (30) zusammenfallen und mit diesen in Längsrichtung der Stromsammelschienen (11) in dem Mindestsicherheitsabstand (c) angeordnet sind und, daß die Ausgangsanschlußstellen der kleinsten Installationsgeräte (30) in Längsrichtung der Stromsammelschienen (11) ebenfalls im Mindestsicherheitsabstand (c) angeordnet und senkrecht zu den Stromsammelschienen (11) auf die Eingangskontaktstellen ausgerichtet sind (Fig. 2).

9. Einrichtung nach Anspruch 7, dadurch gekennzeichnet, daß bei den größeren Installationsgeräten (50) der Baureihe die Ausgangskontaktstellen der Verbindungsschienen (57,58,59) mit den Eingangskontaktstellen und Anschlußkontaktelementen (51,53,55) der Installationsgeräte (50) zusammenfallen und mit diesen in Längsrichtung der Stromsammelschienen (11) in dem für diese größeren Installationsgeräte erforderlichen Anreihabstand (d) angeordnet sind, und daß die Ausgangsanschlußstellen der größeren Installationsgeräte (50) in Längsrichtung der Stromsammelschienen (11) ebenfalls in dem Anreihabstand (d) angeordnet und senkrecht zu den Stromsammelschienen (11) auf die Eingangskontaktstellen und Anschlußkontaktelemente (51,53,55) ausgerichtet sind (Fig. 4).

10. Einrichtung nach Anspruch 8 oder 9, dadurch gekennzeichnet, daß die Eingangskontaktstellen im Bereich der einen und die Ausgangsanschlußstellen der Installationsgeräte (30 bzw. 50) im Bereich der anderen, parallel zu den Stromsammelschienen (11) verlaufenden Seiten des Installationsgerätes angeordnet sind.

11. Einrichtung nach einem der Ansprüche 1 bis 10, dadurch gekennzeichnet, daß bei als NH-Sicherungshaltern oder NH-Sicherungslastschaltern ausgebildeten Installationsgeräten (30,50) Aufnahmekontakte (62,63) für NH-Sicherungen mit den Eingangskontaktstellen und den Ausgangsanschlußstellen der Installationsgeräte (30 bzw. 50) elektrisch leitend verbunden sind.

12. Einrichtung nach Anspruch 11, dadurch gekennzeichnet, daß die mit den Ausgangsanschlußstellen verbundenen Aufnahmekontakte (63) zusätzlich als Schraub- oder Klemmanschluß (64) ausgebildet sind.

13. Einrichtung nach Anspruch 9, dadurch gekennzeichnet, daß die Eingangskontaktstellen der äußeren Verbindungsschienen (57,59) der Installationsgeräte (50) durch seitlich in Richtung zu der mittleren geraden Verbindungsschiene (58) hin versetzten Endabschnitten (60,61) der beiden äußeren Verbindungsschienen (57,59) gebildet sind und daß die Eingangskontaktstellen dieser Endabschnitte (60,61) der Verbindungsschienen (57,59) in Längsrichtung der Stromsammelschienen (11) auf den Mindestsicherheitsabstand (c) gebracht sind.

14. Einrichtung nach Anspruch 1,

dadurch gekennzeichnet,
daß mit dem Adapter (10) einzelne Installationsgeräte mit einem einzigen Anschlußkontaktelement verbindbar sind.

## Claims

1. Device for the mechanical and electrical connection of installation apparatuses (30, 50), such as circuit breakers, earth-leakage circuit breakers, NH-safety load isolators 1) , NH-fuse-carriers 1) and such-like, with current bus-bars of a basic bus-bar system; in the case of this device, several installation apparatuses (30, 50) can be spaced out in a row in the longitudinal direction of the current bus-bars; if the installation apparatuses (30, 50) are to be connected with a bus-bar system with a different centre-to-centre distance (a) of the current bus-bars (11), adapters (10) with a respective number of contact bars (12, 16, 20) are intended, which are, in the area of the bottom side of the adapter(10), furnished with connection contact elements (24, 25, 26), the connection contact elements (24, 25, 26) being arranged vertically to the current bus-bars (11), in the centre-to-centre distance (a) of the current bus-bars (11) of the different bus-bar system, and connection contact elements for the installation of the installation apparatuses (30, 50) being arranged at the contact bars (12, 16, 20) in the area of the upper side of the adapter (10),

   characterized by the fact
   that installation apparatuses (30, 50) are used in the case of which the connection contact elements (51, 53, 55) are arranged vertically to the current bus-bars in the predetermined connection distance (b) of the current bus-bars of the basic bus-bar system,

   that the connection elements of the contact bars (12, 16, 20) of the adapter (10) are formed as current bus-bar-like contact ends (13, 17, 21) in the connection distance (b) of the connection contact elements (31, 35, 39 resp. 51, 53, 55) of the installation apparatuses (30 resp. 50) and that they are arranged in the longitudinal direction of the current bus-bars (11) with a minimum safety zone (c),

   that where the smallest installation apparatuses (30) of a fabricated series of installation apparatuses (30) are concerned, the connection contact elements (31, 35, 39) are arranged in the longitudinal direction of the current bus-bars (11) in this minimum safety zone (c),
   and that where the larger installation apparatuses (50) of a fabricated series of installation apparatuses are concerned, connecting bands (57, 58, 59) of the installation apparatuses (50) convert the minimum safety zone (c) specified for the connection contact elements (51, 53, 55) in the longitudinal direction of current bus-bars (11) into an aligning distance (d) which is needed for the departure contact places of the combined installation apparatuses (50).

2. Device according to claim 1,
   characterized by the fact
   that the connection contact elements (24, 25, 26) of the adapters (10) are formed as contact-bridge pieces, the side-legs of which end in hooks which grip behind the current bus-bars (11),
   and that clamping screws (44) can be screwed into the centre-legs (43) of the contact-bridge pieces, with which the corresponding contact bars (12, 16, 20) of the adapter (10) can be braced with the corresponding current bus-bars (11).

3. Device according to claim 1 or 2.
   characterized by the fact
   that the contact bars (12, 16, 20) are punched and bent out of flat material,
   that those sections of the contact bars (12, 16, 20) which are turned towards the bottom side, flush with the bottom side of the adapter casing,
   and that the contact ends (13, 17, 21) of the contact bars (12, 16, 20) are arranged in the area of clearances within the upper side of the adapter casing and that they flush with this.

4. Device according to one of the claims 1 to 3, characterized by the fact
   that the angular contact bars (12, 16, 20) of the adapter (10) are lead and held between partitions (14, 19, 22) of the adapter (10), the lockdown extensions of the partitions (14, 19, 22) engaging in lock-down apertures (15, 18, 23) of the contact bars (12, 16, 20).

5. Device according to one of the claims 1 to 4, characterized by the fact

1) NH = German abbreviation for "low voltage standards of the association of German Electrical nominal voltage up to 1000 Volts

- high performance"; according to the Engineers (VDE) , low voltage means a

that cover plates (27) cover the open upper side of the adapter casing with the exception of insertion inlets for the connection contact elements (31, 35, 39 resp. 51, 53, 55) of the installation apparatuses (30 resp. 50).

6. Device according to one of the claims 1 to 5, characterized by the fact
that the adapter (10) accommodates three contact bars (12, 16, 20) with connection contact elements (24, 25, 26) for a three-pole bus-bar system as well as three-pole installation apparatuses (30, 50) which are formed as individual part of the apparatus.

7. Device according to one of the claims 1 to 6, characterized by the fact
that the connection contact elements (31, 35, 39 resp. 51, 53, 55) of the installation apparatuses (30 resp. 50) of a fabricated series are formed as contact-bridge pieces, the side-legs of which end in hooks (32, 36, 40) which grip behind the contact ends (13, 17, 21) of the contact bars (12, 16, 20) of the adapter (10), and that clamping screws (34, 38, 42 resp. 52, 54, 60) can be screwed into the centre-legs (43) of the contact-bridge pieces, with which the assigned connecting bands (58) of the installation apparatuses (30 resp. 50) can be braced with the assigned contact ends (13, 17, 21) of the contact bars (12, 16, 20) of the adapter (10).

8. Device according to claim 7, characterized by the fact
that where the smallest installation apparatuses (30) of the fabricated series are concerned, the output contact points of the connecting bands (58) coincide with the input contact points of the installation apparatuses (30) and are arranged, together with these, in the longitudinal direction of the current bus-bars (11), in the minimum safety distance (c) and
that the output connection places of the smallest installation apparatuses (30) are also arranged in the longitudinal direction of the current bus-bars (11) in the minimum safety distance (c) and are aligned to the input contact points, vertically to the current bus-bars (fig.2).

9. Device according to claim 7, characterized by the fact
that where the larger installation apparatuses (50) of the fabricated series are concerned, the output contact points of the connecting bands (57, 58, 59) coincide with the input contact points and with the connection contact elements (51, 53, 55) of the installation apparatuses (50), and are arranged, together with these, in the longitudinal direction of the current bus-bars (11), in the aligning distance (d), which is needed for these larger installation apparatuses
and that the output connection points of the larger installation apparatuses (50) are also arranged in the aligning distance (d) in the longitudinal direction of the current bus-bars (11) and are aligned to the input contact points and connection contact elements (51, 53, 55), vertically to the current bus-bars (11) (fig.4).

10. Device according to claim 7, characterized by the fact
that the input contact points are arranged in the area of one side of the installation apparatus, and the output connection points of the installation apparatuses (30 resp. 50) are arranged in the area of the other side of the installation apparatus, both sides being arranged parallely to the current bus-bars (11).

11. Device according to one of the claims 1 to 10, characterized by the fact
that in the case of installation apparatuses (30, 50), which are formed as NH-fuse-holders 1) or as NH-fuse load isolators 1) , the accommodation contacts (62, 63) for NH-fuses 1) are connected in an electrically conductive way with the input contact points and the output connection points of the installation apparatuses (30 resp. 50).

12. Device according to claim 11, characterized by the fact
that the accomodation contacts (63) connected with the output connection points are additionnally formed as screwing or clamping connection (64).

13. Device according to claim 9, characterized by the fact
that the input contact points of the exterior connecting bands (57, 59) of the installation apparatuses (50) are formed by the terminal sections (60, 61) of the two outer connecting bands (57, 59), which are displaced laterally in the direction towards the straight connecting

1) NH = German abbreviation for "low voltage standards of the Association of German Electrical nominal voltage up to 1000 Volts

- high performance"; according to the Engineers (VDE), low voltage means a

band (58) in the centre,
and that the input contact points of these terminal sections (60, 61) of the connecting bands (57, 59) are arranged in the longitudinal direction of the current bus-bars (11), having the minimum safety distance (c).

14. Device according to claim 1,
characterized by the fact
that individual installation apparatuses can be connected with a single connection contact element, when using the adapter (10).

**Revendications**

1. Dispositif pour la connexion mécanique et électrique d'appareils d'installation (30, 50) comme des disjoncteurs de protection de ligne, des disjoncteurs de protection de courant de défaut, des commutateurs en charge des NH-coupes-circuits (NH = basse tension à haut pouvoir de coupure 1) , des NH-portes fusibles 1) et autres choses semblables, aux barres omnibus de courant d'un système de base de barres omnibus; en ce qui concerne ce dispositif, plusieurs appareils d' installation (30, 50) peuvent être mis à la file en interval les en longueur; s'il faut joindre les appareils d'installation à un système de barres omnibus avec une distance de centre à centre différente (a) des barres omnibus de courant (11), des adaptateurs (10) avec un nombre conforme de rails de contact (12, 16, 20) sont prévus, qui, dans la zone de la face inférieure de l'adaptateur (10), sont équipés des éléments contact de raccord (24, 25, 26); en ce cas, les éléments contact de raccord (24, 25, 26) sont arrangés perpendiculairement sur les barres omnibus de courant (11), dans la distance de centre à centre (a) des barres omnibus de courant (11) du système différent de barres omnibus, et des éléments contact de raccord pour le raccord des appareils d'installation (30, 50) sont arrangés aux rails de contact (12, 16, 20) dans la zone de la face supérieure de l'adaptateur (10),

caractérisé par le fait
que des appareils d'installation (30, 50) sont utilisés dont les éléments contact de raccord (51, 53, 55) sont arrangés perpendiculairement sur les barres omnibus de courant, dans la distance de raccord (b) prédéfinie des barres omnibus de courant du système de base de barres omnibus,

que les éléments de raccord des rails de contact (12, 16, 20) de l'adaptateur (10) sont formés, dans la distance de raccord (b) des appareils d'installation (30, 50), comme des tronçons de contact (13, 17, 21), qui ressemblent aux barres omnibus de courant, et qu'ils sont arrangés en longueur des barres omnibus de courant (11), dans un écart minimal de sécurité, que, en ce qui concerne les plus petits appareils d'installation (30) d'une gamme de fabrication d'appareils d'installation, les éléments contact de raccord (31, 35, 39) sont arrangés en longueur des barres omnibus de courant (11) dans cet écart minimal de sécurité (c),

et que, en ce qui concerne les appareils d'installation plus grands (50) d'une gamme de fabrication d'appareils d'installation, des barres de connexion (57, 58, 59) des appareils d'installation (50) transforment l'écart minimal de sécurité (c) prédéfini pour les éléments contact de raccord (51, 53, 55) en longueur des barres omnibus de courant (11) en une distance d'enfilement (d) qui est nécessaire pour les lieux de contact de sortie des appareils d'installation (50) combinés.

2. Dispositif selon spécification 1,
caractérisé par le fait
que les éléments contact de raccord (24, 25, 26) des adaptateurs (10) sont développés comme étriers de courant, dont les branches latérales sont terminées par des crochets qui enclenchent derrière les barres omnibus de courant (11),
et que des vis de serrage (44) peuvent être serrées dans les branches centrales (43) des étriers de courant, avec qui les rails de contact (12, 16, 20) correspondants peuvent être haubanés avec les barres omnibus de courant correspondantes (11).

3. Dispositif selon spécification 1 ou 2,
caractérisé par le fait
que les rails de contact (12, 16, 20) sont découpés et courbés de matériau plat,
que les sections des rails de contact (12, 16, 20), qui sont tournées vers la face inférieure, forment une surface affleurée avec la face inférieure du boîtier de l'adaptateur, et
que les tronçons de contact (13, 17, 21) des

1) NH = Abbréviation allemande pour "basse tension - haut pouvoir"; conformément aux normes de l'Association d'Ingénieurs Électriciens Allemands (VDE), basse tension signifie une tension nominale de moins de 1000 volt

rails de contact (12, 16, 20) sont arrangés dans la zone des creux dans la face supérieure du boîtier de l'adaptateur et qu'ils forment une surface affleurée avec celle-ci.

4. Dispositif selon une des spécifications 1 à 3, caractérisé par le fait
   que les rails de contacts angulaires (12, 16, 20) de l'adaptateur (10) sont conduits et tenus entre des cloisons de séparation (14, 19, 22) de l'adaptateur, des talons d'encliquetage des cloisons de séparation (14, 19, 22) s'encliquetant dans des ajours d'encliquetage (15, 18, 23) des rails de contact (12, 16, 20).

5. Dispositif selon une des spécifications 1 à 4, caractérisé par le fait
   que des plaques de recouvrement (27) couvrent la face supérieure ouverte du boîtier de l'adaptateur sauf des ouvertures d'entrée pour les éléments contact de raccord (31, 35, 39 resp. 51, 53, 55) des appareils d'installation (30 resp. 50).

6. Dispositif selon une des spécifications 1 à 5, caractérisé par le fait
   que l'adaptateur (10) loge trois rails de contact (12, 16, 20) avec des éléments contact de raccord (24, 25, 26) pour un système tripolaire de barres omnibus et des appareils d'installation tripolaires (30, 50) qui sont formés comme une unité modulaire.

7. Dispositif selon une des spécifications 1 à 6, caractérisé par le fait
   que les éléments contact de raccord (31, 35, 39 resp. 51, 53, 55) des appareils d'installation (30 resp. 50) d'une gamme de fabrication sont formés comme des étriers de courant, dont les branches latérales sont terminées par des crochets (32, 36, 40) enclenchant derrière les tronçons de contact (13, 17, 21) des rails de contact (12, 16, 20) de l'adaptateur (10) et
   que des vis de serrage (34, 38, 42 resp. 52, 54, 56) peuvent être vissées dans les branches centrales (43) des étriers de courant, avec qui des barres de connexion correspondantes (58) des appareils d'installation (30 resp. 50) peuvent être haubanées avec les tronçons de contact correspondants (13, 17, 21) des rails de contact (12, 16, 20) de l'adaptateur (10).

8. Dispositif selon spécification 7,
   caractérisé par le fait
   que, en ce qui concerne les appareils d'installation les plus petits (30) de la gamme de fabrication, les points de contact de sortie des barres de connexion (58) coïncident avec les points de contact d'entrée des appareils d'installation (30) et qu'ils sont arrangés, ensemble avec ceux, en longueur des barres omnibus de courant (11) dans l'écart minimal de sécurité (c),
   et
   que les points de couplage de sortie des plus petits appareils d'installation (30) sont aussi arrangés en longueur des barres omnibus de courant (11) et aussi dans l'écart minimal de sécurité (c), et sont arrangés perpendiculairement sur les points de contact d'entrée (fig. 2).

9. Dispositif selon spécification 7,
   caractérisé par le fait
   que, en ce qui concerne les plus grands appareils d'installation (50) de la gamme de fabrication, les points de contact de sortie des barres de connexion (57, 58, 59) coïncident avec les points de contact d'entrée et avec les éléments contact de raccord (51, 53, 55) des appareils d'installation (50) et qu'ils sont arrangés, ensemble avec ceux, en longueur des barres omnibus de courant (11) dans la distance d'enfilement (d) qui est nécessaire pour ces appareils d'installation plus grands, et
   que les points de couplage de sortie des plus grands appareils d'installation (50) sont aussi arrangés en longueur des barres omnibus de courant (11) et aussi dans la distance d'enfilement (d), et qu'ils sont ajustés perpendiculairement sur les barres omnibus de courant (11) sur les points de contact d'entrée et les éléments contact de raccord (51, 53, 55) (fig. 4).

10. Dispositif selon spécification 8 ou 9,
    caractérisé par le fait
    que les points de contact d'entrée sont arrangés dans la zone d'un côté de l'appareil d'installation et les points de couplage des appareils d'installation (30 resp. 50) sont arrangés dans la zone de l'autre côté de l'appareil d'installation, les deux côtés allant en parallèle des barres omnibus de courant (11).

11. Dispositif selon une des spécifications 1 à 10, caractérisé par le fait
    que dans le cas des appareils d'installation (30, 50) formés comme des NH-portes-fusibles

1) NH = Abbréviation allemande pour "basse tension - haut pouvoir"; conformément aux normes de l'Association d'Ingénieurs Électriciens Allemands (VDE), basse tension signifie une tension nominale de moins de 1000 volt

1) ou comme des commutateurs en charge des NH-coupes-circuits 1) , des contacts de logement (62, 63) pour des NH-coupes-circuits 1) sont en connexion électroconductrice avec les points de contact d'entrée et les points de couplage de sortie des appareils d'installation (30 resp. 50).

12. Dispositif selon spécification 11, caractérisé par le fait que les contacts de logement (63) raccordés avec les points de couplage de sortie sont, en outre, formé comme connexion serrée ou raccord filé (64).

13. Dispositif selon spécification 9, caractérisé par le fait, que les points de contact d'entrée des barres de connexion extérieures (57, 59) des appareils d'installation (50) sont formés par les sections finales (60, 61) des deux barres de connexion extérieures (57, 59) qui sont déplacées latéralement vers la direction de la barre centrale droite (58) et que les points de contact d'entrée de ces sections terminales (60, 61) des barres de connexion (57, 59) sont arrangés en longueur des barres omnibus de courant (11), ayant l'écart minimal de sécurité (c).

14. Dispositif selon spécification 1, caractérisé par le fait que des appareils d' installation individuels peuvent être raccordés avec un seul élément contact de raccord, en utilisant l'adaptateur (10).

FIG.1

FIG.2

EP 0 262 554 B1

FIG.3

FIG.4

EP 0 262 554 B1